# EUROPÄISCHE PATENTSCHRIFT

(11) **EP 2 512 863 B1**
(45) Veröffentlichungstag und Bekanntmachung des Hinweises auf die Patenterteilung: **04.03.2015**
(21) Anmeldenummer: 10796277.1
(22) Anmeldetag: 10.12.2010
(51) Int. Cl.: B60Q 1/14, B60Q 1/48

(54) **VERFAHREN ZUM BETRIEB EINER BELEUCHTUNGSEINRICHTUNG EINES KRAFTFAHRZEUGS SOWIE KRAFTFAHRZEUG**
METHOD FOR OPERATING A LIGHTING DEVICE OF A MOTOR VEHICLE AND MOTOR VEHICLE
PROCÉDÉ DE FONCTIONNEMENT D'UN DISPOSITIF D'ÉCLAIRAGE D'UN VÉHICULE À MOTEUR ET VÉHICULE À MOTEUR

(30) Priorität: 18.12.2009 DE 102009058975
(43) Veröffentlichungstag der Anmeldung: 24.10.2012
(73) Patentinhaber: Audi AG, 85045 Ingolstadt (DE)
(72) Erfinder: SPREITZER, Christian, 85051 Ingolstadt (DE); BECK, Matthias, 86633 Neuburg a. d. Donau (DE)
(74) Vertreter: Thielmann, Frank
(86) Internationale Anmeldenummer: PCT/EP2010/007552
(87) Internationale Veröffentlichungsnummer: WO 2011/072828

(56) Entgegenhaltungen:
- WO-A2-00/50260
- DE-A1- 4 241 298
- DE-A1- 4 303 808
- DE-A1- 10 009 071
- DE-A1- 19 722 227
- DE-A1- 19 804 306
- DE-U1- 20 318 814
- US-A1- 2009 167 519

## Beschreibung

Die Erfindung betrifft ein Verfahren zum Betrieb einer Beleuchtungseinrichtung eines Kraftfahrzeugs zur Beleuchtung des Kraftfahrzeugumfeldes, wobei die Beleuchtungseinrichtung in mehreren Betriebsmoden mit unterschiedlicher Leuchtleistung betreibbar ist. Ein solches Verfahren ist aus WO 0050260 bekannt.

Beleuchtungseinrichtungen von Kraftfahrzeugen zur Beleuchtung des Kraftfahrzeugumfeldes sind an der Außenseite des Kraftfahrzeugs angeordnet, wobei an der Frontseite hell leuchtende Scheinwerfer zur Aufhellung des Kraftfahrzeugvorfeldes und an der Rückseite rot leuchtende Scheinwerfer zur Warnung nachfolgender Fahrzeuge angeordnet sind.

Bekannte Betriebsmoden zum Betrieb der genannten Beleuchtungseinrichtung sind das Standlicht, das Abblendlicht und das Fernlicht. Für die einzelnen Betriebsmoden existieren auch andere Bezeichnungen, daher werden die genannten Betriebsmoden im Folgenden kurz beschrieben.

Das Standlicht dient zur Beleuchtung eines stehenden Kraftfahrzeugs. Dabei beträgt die Lichtstärke der Frontscheinwerfer nur einige Prozent des Abblendlichts, bei den Heckscheinwerfern entspricht die Lichtstärke beinahe 100 % der Lichtstärke bei eingeschaltetem Abblendlicht.

Das Abblendlicht dient der Aufhellung der Fahrzeugumgebung vor dem Kraftfahrzeug während der Fahrt. Die Ausleuchtung reicht wenige Dutzend Meter weit vor das Kraftfahrzeug, dabei sind die Frontscheinwerfer so eingestellt, dass Fahrer in entgegenkommenden Fahrzeugen nicht geblendet werden.

Beim Fernlicht wird dagegen eine maximale Ausleuchtung des Kraftfahrzeugvorfeldes angestrebt, weshalb bei diesem Betriebsmodus aufgrund der Scheinwerfereinstellung die Gefahr besteht, dass Fahrer in entgegenkommenden Fahrzeugen geblendet werden.

Dabei besteht das Problem, dass ein Fahrer versehentlich statt des Abblendlichts das Standlicht einschaltet und aufgrund weiterer Lichtquellen wie beispielsweise der Straßenbeleuchtung in Städten den fehlerhaften Betriebsmodus der Beleuchtungseinrichtung gar nicht bemerkt. Dann ist das Kraftfahrzeug von anderen Verkehrsteilnehmern aber schlechter wahrnehmbar, weshalb sich die Unfallgefahr erhöht.

Der Erfindung liegt damit die Aufgabe zugrunde, ein Verfahren anzugeben, das die Verkehrssicherheit des Kraftfahrzeugs erhöht. Zur Lösung der Aufgabe ist ein Verfahren gemäß Anspruch 1 vorgesehen.

Das Problem, schlecht für andere Verkehrsteilnehmer sichtbar zu sein, ergibt sich erst, wenn das Kraftfahrzeug auf einer Straße bewegt wird. Dementsprechend ist die Fahrgeschwindigkeit ein Maß dafür, ob das Kraftfahrzeug auf einer Straße gefahren wird oder beispielsweise lediglich langsam in eine Garage hineingefahren wird. Denn im letzteren Beispiel beträgt die Fahrgeschwindigkeit lediglich wenige Stundenkilometer, die Gabe eines Warnsignals an den Fahrer ist dementsprechend unnötig.

Vorzugsweise kann der Fahrer bei einem für ein stehendes Kraftfahrzeug ausgebildeten oder vorgesehenen Betriebsmodus gewarnt werden. Ein solcher Betriebsmodus ist beispielsweise das Standlicht.

Zweckmäßigerweise kann als Mindestgeschwindigkeit die Geschwindigkeit 10 km/h verwendet werden. Die Mindestgeschwindigkeit dient, wie oben bereits beschrieben, dazu, zu erkennen, ob das Kraftfahrzeug auf einer Straße fährt und somit für andere Verkehrsteilnehmer sichtbar sein sollte oder nicht. Mit einer Geschwindigkeit von 10 km/h werden alle Bewegungen des Kraftfahrzeugs ausgefiltert, bei denen das Kraftfahrzeug lediglich um kurze Strecken und außerhalb von Straßen langsam bewegt wird. Dadurch können unnötige Warnungen des Fahrers vermieden werden.

Mit besonderem Vorteil kann der Fahrer optisch und/oder akustisch und/oder haptisch gewarnt werden. Besonders zweckmäßig ist eine Kombination einer akustischen mit einer optischen Warnung, wobei ein Signalton dem Fahrer zu erkennen gibt, dass eine Art Störung oder Problem vorliegt, während die genaue Definition des Problems mittels einer optischen Anzeige am Armaturenbrett erfolgt. Die Warnung erfolgt also zweistufig, die akustische Warnung dient der Erregung der Aufmerksamkeit des Fahrers, so dass dieser den Blick zum Armaturenbrett wendet. An diesem ist dann beispielsweise ein blinkendes Symbol für das Abblendlicht dargestellt, wodurch der Fahrer darauf aufmerksam gemacht wird, dieses einzuschalten. Die Zweistufigkeit der Warnung ist sinnvoll, da eine Vielzahl von Steuerungseinrichtungen Warnsignale an den Fahrer ausgibt, weshalb ein einfacher Piepston nicht unbedingt ausreicht, um die Problemquelle eindeutig zu identifizieren. Andererseits kann rein akustisch außer durch Sprachansagen keine allzu große Anzahl von Warnmeldungen ausgegeben werden, da der Fahrer Warnmeldungen hier sehr schnell nicht mehr differenzieren kann. Durch die Zweistufigkeit der Warnsignalgabe werden diese Probleme vermieden.

Erfindungsgemäß wird die Warnung in Abhängigkeit des Signals einer kraftfahrzeugseitig vorhandenen Uhr unterdrückt oder erzeugt Das Einschalten eines für ein fahrendes Kraftfahrzeug ausgebildeten Betriebsmodus dient der Erhöhung der Erkennbarkeit des eigenen Kraftfahrzeugs. Dadurch soll vermieden werden, dass man von anderen Verkehrsteilnehmern schlecht gesehen wird, weil die Lichtverhältnisse nicht ausreichend sind. Die Lichtverhältnisse hängen aber selbstverständlich von der Uhrzeit ab. Die Warnung soll also dementsprechend nur bei Dunkelheit oder bei Dämmerlicht gegeben werden, bei Tageslicht ist die Gabe einer Warnung an den Fahrer unnötig.

Dabei ist die reine Uhrzeit nur in beschränktem Maße verwertbar, da in den Wintermonaten das Tageslicht eine kürzere Zeit zur Verfügung steht als in den Sommermonaten. Bei reiner Berücksichtigung der Uhrzeit kann auf die Gabe eines Warnsignals also nur verzichtet werden, wenn am Tag mit der kürzesten Lichtlänge, nämlich dem 21. Dezember, überhaupt Tageslicht vorliegt. Dabei ist noch zu beachten, dass diese Tageslichtlänge vom Breitgrad abhängt. Nahe dem Polarkreis gibt es beispielsweise zur Wintersonnenwende einen Tag ohne Sonnenaufgang und zur Sommersonnenwende einen Tag ohne Sonnenuntergang und dementsprechend einen Tag völlig ohne Tageslicht und einen Tag ohne Nacht. Da der Standort eines Kraftfahrzeugs aber mit wenig Aufwand mittels GPS ermittelbar ist und auch das Datum bekannt ist, kann die Steuerungseinrichtung des Kraftfahrzeugs ermitteln, ob die Gabe eines Warnsignals zur gegebenen Uhrzeit notwendig ist oder nicht.

Erfindungsgemäß wird die Warnung zusätzlich in Abhängigkeit der mittels eines Helligkeitssensors bestimmten Umgebungshelligkeit unterdrückt oder erzeugt.

Statt über die Uhrzeit, das Datum und den Breitgrad indirekt auf die Umgebungshelligkeit zu schließen, kann diese auch direkt über einen Helligkeitssensor erfasst werden. In diesem Fall müssen die Sensorsignale des Helligkeitssensors einen bestimmten Schwellenwert unterschreiten, dass die Gabe eines Warnsignals an den Fahrer als nötig erachtet wird. Anderenfalls wird das Warnsignal unterdrückt.

Erfindungsgemäß wird die Warnung in Abhängigkeit der aktuellen Fahrgeschwindigkeit variiert.

Die Gefahr, dass andere Verkehrsteilnehmer das eigene Kraftfahrzeug übersehen, steigt mit der Fahrgeschwindigkeit des Kraftfahrzeugs an. Je schneller das Kraftfahrzeug fährt, desto größer ist also die Gefahr. Dementsprechend wird die Warnung mit zunehmender Geschwindigkeit verstärkt. Beispielsweise kann der Signalton, der den Fahrer akustisch warnt, in der Lautstärke an die Fahrgeschwindigkeit angepasst werden. Je schneller das Kraftfahrzeug fährt, desto lauter ist dementsprechend der Signalton. Im Fall einer blinkenden Anzeige am Armaturenbrett kann beispielsweise die Blinkfrequenz mit zunehmender Fahrgeschwindigkeit erhöht werden, da höhere Blinkfrequenzen eher wahrgenommen werden als langsame. Je schneller das Kraftfahrzeug fährt, desto intensiver ist also die Warnung.

Vorteilhafterweise kann ein Sensor zum Erfassen des Lösens der Handbremse verwendet werden und der Fahrer beim Lösen der Handbremse gewarnt werden. Bereits das Lösen der Handbremse zeigt an, dass das Kraftfahrzeug in unmittelbarer Zukunft bewegt werden wird. Somit kann der Fahrer noch früher gewarnt werden.

Daneben betrifft die Erfindung ein Kraftfahrzeug mit einer Beleuchtungseinrichtung, einem Geschwindigkeitssensor und einer Steuerungseinrichtung. Die Steuerungseinrichtung des Kraftfahrzeugs zeichnet sich dadurch aus, dass sie zur Durchführung des beschriebenen Verfahrens ausgebildet ist.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: ein Ablaufschema zur Steuerung der Ausgabe einer Warnung an den Fahrer, und
- Fig. 3: die Ausgabe einer Warnung an einer Anzeigeeinrichtung.

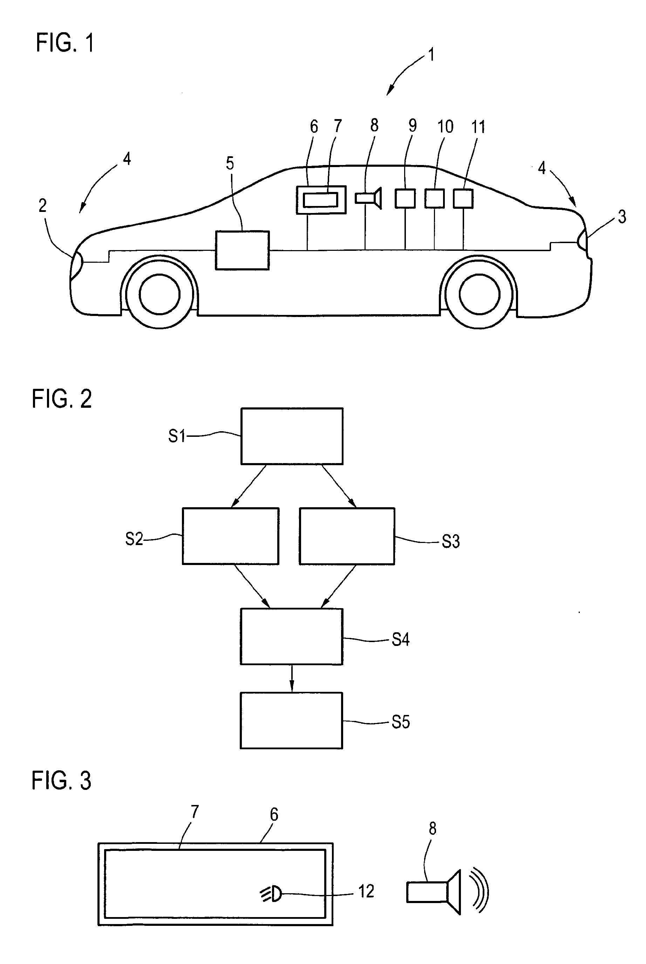

Fig. 1 zeigt ein Kraftfahrzeug 1 mit Frontscheinwerfern 2 und Heckscheinwerfern 3. Diese bilden zusammen die Beleuchtungseinrichtung 4 zur Beleuchtung des Kraftfahrzeugumfeldes. Üblicherweise befinden sich an der Frontseite jeweils zwei Frontscheinwerfer 2 und an der Heckseite zwei Heckscheinwerfer 3, jedoch ist weder die Anzahl noch die Positionierung in irgendeiner Art und Weise beschränkt. Wichtig ist lediglich, dass sie zur Beleuchtung des Kraftfahrzeugumfeldes dienen. Dabei erfüllen die Frontscheinwerfer 2 einen doppelten Zweck. Zum einen erhellen sie die Fahrbahn vor dem Kraftfahrzeug, andererseits können andere Verkehrsteilnehmer das Kraftfahrzeug bei Dunkelheit aufgrund der im Betrieb befindlichen Frontscheinwerfer 2 gut erkennen.

Zur Kontrolle der Kraftfahrzeugfunktionen und zur Ansteuerung der einzelnen Einrichtungen befindet sich im Kraftfahrzeug eine Steuerungseinrichtung 5. Diese ist mit den Frontscheinwerfern 2, den Heckscheinwerfern 3 sowie einer Anzeigeeinrichtung 7 im Armaturenbrett 6, einem Lautsprecher 8, einer Uhr 9, einem GPS-Sensor 10 und einem Helligkeitssensor 11 verbunden. Alle Informationen laufen dementsprechend in der Steuerungseinrichtung 5 zusammen.

Beim Betrieb des Kraftfahrzeugs 1 kann das Problem auftreten, dass der Fahrer bei schlechten Helligkeitsbedingungen, insbesondere nachts, statt des für ein fahrendes Kraftfahrzeug vorgesehenen Abblendlichts lediglich das Standlicht aktiviert. Gerade in Städten mit einer guten Straßenbeleuchtung muss dies dem Fahrer nicht auffallen. Dann besteht die Gefahr, dass das schlecht erhellte Kraftfahrzeug 1 von anderen Verkehrsteilnehmern schlechter wahrgenommen wird, wodurch sich die Unfallgefahr erhöht. Auch kann der Fahrer beim Einfahren in beispielsweise ein unbeleuchtetes Tunnel plötzlich die Orientierung verlieren, da ihm unerwartet die Beleuchtung des Kraftfahrzeugvorfeldes fehlt. Um solche Situationen zu vermeiden arbeitet die Steuerungseinrichtung 5 ein Kontroll- oder auch Steuerungsverfahren ab, das wie in Fig. 2 abgebildet abläuft.

Fig. 2 zeigt ein Verfahren, das bei Betrieb einer Beleuchtungseinrichtung eines Kraftfahrzeugs zur Beleuchtung des Kraftfahrzeugumfeldes fehlerhafte Einstellungen vermeiden hilft. Nach dem Schritt S1, dem Starten des Kraftfahrzeugs 1, werden als nächste Schritte S2 und S3 die Fahrgeschwindigkeit und der Betriebsmodus der Beleuchtungseinrichtung überprüft. In Schritt S2 findet dabei die Kontrolle statt, ob die Fahrgeschwindigkeit einen Schwellwert, z. B. die Mindestgeschwindigkeit 10 km/h überschreitet. In Schritt S3 wird überprüft, ob als Betriebsmodus der Beleuchtungseinrichtung 4 das Standlicht aktiviert ist. Selbstverständlich können auch andere Schwellwerte, also Mindestgeschwindigkeiten, beispielsweise 15 km/h oder 20 km/h festgelegt werden. Auch andere Betriebsmodi sind denkbar, in Schritt S3 wird überprüft, ob der aktivierte Betriebsmodus für ein stehendes Kraftfahrzeug ausgebildet ist. Die Schritte S2 und S3 können parallel oder nacheinander ausgeführt werden, ohne das Ergebnis zu verändern. Falls im Schritt S2 festgestellt wird, dass die Fahrgeschwindigkeit die Mindestgeschwindigkeit 10 km/h überschreitet und in Schritt S3 weiterhin erkannt wird, dass als Betriebsmodus das Standlicht aktiviert ist, dann werden als Schritt S4 weitere Kontrollabfragen ausgeführt. Diese Kontrollabfragen stellen sicher, ob die Ausgabe einer Warnung an den Fahrer notwendig ist. Dabei wird in Abhängigkeit des Signals eines Helligkeitssensors die Umgebungshelligkeit ermittelt. Bei genügender Umgebungshelligkeit wird auf die Aufgabe eines Warnsignals verzichtet. Zusätzlich zur Berücksichtigung der Signale eines Helligkeitssensors wird die Warnung unter Berücksichtigung der Uhrzeit ausgegeben. Im Zeitraum von 9:00 - 15:00 Uhr ist in Mitteleuropa zu jeder Jahrzeit eine ausreichende Umgebungshelligkeit vorhanden, weshalb in diesem Zeitraum eine Warnung unnötig ist. Dagegen ist zwischen 23:00 - 04:00 Uhr in jedem Fall eine Warnung angezeigt. Diese doppelte Überprüfung ist sinnvoll, da die Signale des Helligkeitssensors beispielsweise durch eine Straßenlaterne neben dem Kraftfahrzeug 1 oder aufgrund der Verschmutzung des Helligkeitssensors eventuell täuschen und zu einem falschen Schluss über die Umgebungshelligkeit führen. Gemäß eines nicht erfindungsgemäßen Beispiels kann der Schritt S4, die Durchführung weiterer Kontrollabfragen, kann allerdings auch vollständig entfallen. In diesem Fall wird der Fahrer unabhängig von der Umgebungshelligkeit zu jeder Tages- und Nachtzeit vor einem nicht für ein fahrendes Kraftfahrzeug 1 vorgesehenen Betriebsmodus der Beleuchtungseinrichtung 4 gewarnt. Dies ist insbesondere da notwendig, wo aufgrund gesetzlicher Bestimmungen das Abblendlicht bei jeder Fahrt einzuschalten ist.

Dementsprechend kann das Vorsehen des Schrittes S4 in Abhängigkeit des Signals des GPS-Sensors 10 modifiziert werden, da derartige gesetzliche Regelungen immer innerhalb bestimmter Landesgrenzen gelten und dadurch eine landesabhängige Modifikation der Warnung erreicht wird. Als zusätzliches nicht erfindungsgemäßes Beispiel kann der Schritt S4 auf Wunsch des Fahrers auch dann ausfallen, wenn dies nicht aufgrund gesetzlicher Regelungen als notwendig erscheint. Der Fahrer kann also über die Steuerungseinrichtung des Kraftfahrzeugs selbst festlegen, ob er in jedem Fall gewarnt werden will oder ob dies nur geschieht, solange beispielsweise die Umgebungshelligkeit nicht ausreichend ist.

Wenn die Bedingungen zur Ausgabe einer Warnung in den Schritten S2, S3 und gegebenenfalls S4 gegeben sind, so wird als Schritt S5 eine Warnung an den Fahrer ausgegeben.

Die Ausgabe der Warnung erfolgt wie in Fig. 3 abgebildet. Der Fahrer wird zunächst durch die Ausgabe eines Piepstons über den Lautsprecher 8 alarmiert. Die Lautstärke und die Frequenz des Piepstons hängen dabei von der Fahrgeschwindigkeit des Kraftfahrzeugs 1 ab. Aufgrund des Piepstons wird der Fahrer veranlasst, seinen Blick auf das Armaturenbrett 6 zu werfen. Dort ist in der Anzeigeeinrichtung 7 das Symbol 12 dargestellt, das dem Fahrer signalisiert, das Abblendlicht einzuschalten. Um dem Fahrer anzuzeigen, dass das Abblendlicht noch nicht aktiviert ist, wird das Symbol 12 blinkend dargestellt. Da in der Anzeigeeinrichtung noch weitere Informationen wie beispielsweise die aktuelle Fahrgeschwindigkeit dargestellt werden wird durch das Blinken des Symbols 12 außerdem erreicht, dass der Fahrer sofort erfassen kann, auf welche Anzeige er seine Aufmerksamkeit lenken soll. Denn durch den Piepston erhält er lediglich die Information, dass irgendein Problem besteht, ohne dass er sofort erfassen kann, um welches Problem es sich dabei handelt.

Alternativ kann statt des Piepstons auch eine detaillierte Sprachausgabe am Lautsprecher 8 erfolgen. Dann ist eine zusätzliche Ausgabe eines Symbols 12 an der Anzeigeeinrichtung 7 nicht notwendig, aber immer noch hilfsreich.

Statt eines akustischen Signals kann zur ersten Warnung des Fahrers auch ein haptisches Signal verwendet werden, beispielsweise indem das Lenkrad vibriert. Auch dadurch wird der Fahrer veranlasst, seinen Blick auf die Anzeigeeinrichtung 7 zu werfen, wo er das Symbol 12 erblickt.

## Patentansprüche

1. Verfahren zum Betrieb einer Beleuchtungseinrichtung (4) eines Kraftfahrzeugs (1) zur Beleuchtung des Kraftfahrzeugumfeldes, wobei die Beleuchtungseinrichtung (4) in mehreren Betriebsmoden mit unterschiedlicher Leuchtleistung betreibbar ist, wobei der Fahrer ein Warnsignal erhält, wenn die Fahrgeschwindigkeit eine vorbestimmte Mindestgeschwindigkeit überschreitet und gleichzeitig ein vorbestimmter Betriebsmodus eingestellt ist,
**dadurch gekennzeichnet,**
**dass** die Warnung in Abhängigkeit der mittels eines Helligkeitssensors (11) bestimmten Umgebungshelligkeit und des Signals einer kraftfahrzeugseitig vorhandenen Uhr (9) unterdrückt oder erzeugt wird und, dass die Warnung in Abhängigkeit der aktuellen Fahrgeschwindigkeit variiert wird.

2. Verfahren nach Anspruch 1,
**dadurch gekennzeichnet,**
**dass** der Fahrer bei einem für ein stehendes Kraftfahrzeug ausgebildeten Betriebsmodus gewarnt wird.

3. Verfahren nach einem der vorangehenden Ansprüche,
**dadurch gekennzeichnet,**
**dass** als Mindestgeschwindigkeit die Geschwindigkeit 10 km/h verwendet wird.

4. Verfahren nach einem der vorangehenden Ansprüche,
**dadurch gekennzeichnet,**
**dass** der Fahrer optisch und/oder akustisch und/oder haptisch gewarnt wird.

5. Verfahren einem der vorangehenden Ansprüche,
**dadurch gekennzeichnet,**
**dass** ein Sensor zum Erfassen des Lösens der Handbremse verwendet wird und der Fahrer beim Lösen der Handbremse gewarnt wird.

6. Kraftfahrzeug mit einer Beleuchtungseinrichtung (4) und einer Steuerungseinrichtung (5), die zur Durchführung des Verfahrens nach einem der vorangehenden Ansprüche ausgebildet ist.

## Claims

1. Method for operating a lighting device (4) of a motor vehicle (1) for illuminating the region surrounding the motor vehicle, the lighting device (4) being operable in a plurality of operating modes having different light power, the driver receiving an alert if the vehicle speed exceeds a predetermined minimum speed and a predetermined operating mode is set at the same time, **characterised in that** the alert message is suppressed or generated depending on both the brightness of the surroundings as determined by means of a brightness sensor (11) and the signal of a clock (9) present in the motor vehicle, and **in that** the alert message is varied depending on the current vehicle speed.

2. Method according to claim 1, **characterised in that** the driver is alerted in the event of an operating mode designed for a stationary motor vehicle.

3. Method according to either of the preceding claims, **characterised in that** the speed 10 km/h is used as the minimum speed.

4. Method according to any of the preceding claims, **characterised in that** the driver is alerted visually and/or acoustically and/or haptically.

5. Method according to any of the preceding claims, **characterised in that** a sensor for detecting the release of the handbrake is used and the driver is alerted when the handbrake is released.

6. Motor vehicle comprising a lighting device (4) and a control device (5) which is designed to carry out the method according to any of the preceding claims.

## Revendications

1. Procédé pour faire fonctionner un dispositif d'éclairage (4) d'un véhicule automobile (1) pour l'éclairage de l'environnement du véhicule automobile, le dispositif d'éclairage (4) pouvant être utilisé dans plusieurs modes de fonctionnement avec différentes puissances d'éclairage, le conducteur recevant un signal d'avertissement lorsque la vitesse d'avance du véhicule automobile dépasse une vitesse minimale prédéterminée et que, en même temps, un mode de fonctionnement prédéterminé est réglé,
**caractérisé en ce que** l'avertissement est bloqué ou produit en fonction de la luminosité de l'environnement déterminée au moyen d'un capteur de luminosité (11) et en fonction du signal d'une horloge (9) présente du côté du conducteur et **en ce que** l'avertissement varie en fonction de la vitesse actuelle d'avance du véhicule automobile.

2. Procédé selon la revendication 1, **caractérisé en ce que** le conducteur est averti en présence d'un mode de fonctionnement conçu pour un véhicule automobile stationnaire.

3. Procédé selon l'une des revendications précédentes, **caractérisé en ce que**, comme vitesse minimale, on utilise la vitesse de 10 km/h.

4. Procédé selon l'une des revendications précédentes, **caractérisé en ce que** le conducteur est averti de façon optique et/ou acoustique et/ou tactile.

5. Procédé selon l'une des revendications précédentes, **caractérisé en ce qu'**un capteur est utilisé pour détecter le relâchement du frein à main et **en ce que** le conducteur est averti lors du relâchement du frein à main.

6. Véhicule automobile avec un dispositif d'éclairage (4) et avec un dispositif de commande (5) qui est conçu pour la mise en oeuvre du procédé selon l'une des revendications précédentes.
